# EUROPÄISCHE PATENTSCHRIFT

(11) **EP 3 214 602 B1**
(45) Veröffentlichungstag und Bekanntmachung des Hinweises auf die Patenterteilung: **08.05.2019**
(21) Anmeldenummer: 16158357.0
(22) Anmeldetag: 03.03.2016
(51) Int. Cl.: G06T 7/521

(54) **VERFAHREN ZUR DREIDIMENSIONALEN ERFASSUNG VON OBJEKTEN**
METHOD FOR THREE-DIMENSIONAL RECORDING OF OBJECTS
PROCÉDÉ DE DÉTECTION TRIDIMENSIONNELLE D'OBJETS

(43) Veröffentlichungstag der Anmeldung: 06.09.2017
(73) Patentinhaber: SICK AG, 79183 Waldkirch (DE)
(72) Erfinder: Hornung, Dr. Armin, 79110 Freiburg (DE); Neubauer, Dr. Matthias, 79102 Freiburg (DE)

(56) Entgegenhaltungen:
- US-A1- 2015 002 628
- US-B2- 8 649 025
- ETHAN RUBLEE ET AL: "ORB: An efficient alternative to SIFT or SURF", COMPUTER VISION (ICCV), 2011 IEEE INTERNATIONAL CONFERENCE ON, IEEE, 6. November 2011 (2011-11-06), Seiten 2564-2571, XP032101497, DOI: 10.1109/ICCV.2011.6126544 ISBN: 978-1-4577-1101-5
- MICHAEL CALONDER ET AL: "BRIEF: Binary Robust Independent Elementary Features", 5. September 2010 (2010-09-05), COMPUTER VISION - ECCV 2010, SPRINGER BERLIN HEIDELBERG, BERLIN, HEIDELBERG, PAGE(S) 778 - 792, XP019150781, ISBN: 978-3-642-15560-4 * Zusammenfassung * * Abschnitt 3 * * Abbildung 2 *
- YLIOINAS JUHA ET AL: "Learning local image descriptors using binary decision trees", IEEE WINTER CONFERENCE ON APPLICATIONS OF COMPUTER VISION, IEEE, 24 March 2014 (2014-03-24), pages 347-354, XP032609970, DOI: 10.1109/WACV.2014.6836079 [retrieved on 2014-06-16]

## Beschreibung

Die vorliegende Erfindung betrifft ein Verfahren zur dreidimensionalen Erfassung von Objekten, bei welchem eine Szene mittels einer Bilderfassungseinrichtung erfasst wird, wobei ein Kamerabild erzeugt wird. Weiter wird die Szene mit einem Muster beleuchtet, welches zumindest lokal selbstunähnlich ist, wobei ein Bild als Referenzbild entsprechend dem Muster erzeugt wird. Anschließend werden ein Korrelationsfenster als Ausschnitt des ersten Kamerabildes und mehrere Suchfenster als Ausschnitte des Referenzbildes festgelegt, wobei verschiedene Suchfenster verschiedene Bereiche des Referenzbildes wiedergeben. Darauffolgend wird mittels eines Korrelationsverfahrens das dem Korrelationsfenster entsprechende Suchfenster ermittelt.

Verfahren zur dreidimensionalen Erfassung von Objekten sind grundsätzlich bekannt und werden z. B. bei Anwendungen des maschinellen Sehens eingesetzt, um Objekte, Personen und dergleichen zu erfassen und zu erkennen. Beispielsweise kann mittels solcher Verfahren die Position einer Person im Raum oder sogar die Position einzelner Gliedmaßen (z. B. der Hände) der Person festgestellt werden.

Zu diesem Zweck kann eine Szene mit einer Bilderfassungseinrichtung erfasst werden, wobei die Bilderfassungseinrichtung beabstandet zu einer Muster-Beleuchtungseinrichtung bzw. Beleuchtungseinrichtung angeordnet ist. Mittels der Bilderfassungseinrichtung wird ein Bild erzeugt, in welchem beispielsweise ein zu erfassendes Objekt in unterschiedlicher Position im erfassten Bild abgebildet ist. Das Objekt selbst ist nicht im Beleuchtungs-Referenzbild abgebildet. Nur ein bestimmter Musterausschnitt, der zu einem bestimmten Abstand gehört, bzw. nur im Kamerabild auf dem Objekt sichtbar ist. Ein erfasstes Objekt enthält aufgrund seiner Entfernung bzw. Tiefe einen bestimmten Ausschnitt des strukturierten Musters der Beleuchtung bzw. des Referenzbildes.

Ein Korrelationsfenster kann als Ausschnitt des Bildes der Bilderfassungseinrichtung festgelegt werden. Durch die Verwendung von mehreren Suchfenstern in einem Korrelationsverfahren kann nachfolgend dasjenige Suchfenster bestimmt werden, in welchem der Ausschnitt des strukturierten Muster des Korrelationsfensters ebenfalls auffindbar ist.

Aufgrund der unterschiedlichen Positionen des dem zu erfassenden Objekt zugeordneten Musterausschnitts in dem Kamerabild und dem Referenzbild kann ein Winkel von der Bilderfassungseinrichtung und der Beleuchtungseinrichtung zu dem Objekt bestimmt werden, woraufhin mittels Triangulation der Abstand des Objekts zu der Bilderfassungseinrichtung und damit die räumliche Position des Objekts ermittelt werden kann.

Als Korrelationsverfahren kann beispielsweise das sogenannte Census-Verfahren verwendet werden, bei welchem innerhalb des Korrelationsfensters die Helligkeit verschiedener Pixel jeweils mit einem zentralen Pixel verglichen wird. Aus den jeweiligen Vergleichen mit dem zentralen Pixel wird für jeden Vergleich ein Binärwert gebildet, wobei aus sämtlichen Binärwerten ein Census-Vektor gebildet wird, der die relative Helligkeits- bzw. Grauwertverteilung in dem Suchfenster beschreibt. In dem Korrelationsverfahren können dann beispielsweise die erzeugten Census-Vektoren miteinander verglichen werden, um dasselbe Objekt möglichst sicher in dem Kamerabild und dem Referenzbild aufzufinden.

Alternativ zu dem Census-Verfahren kann auch z. B. das sogenannte BRIEF-Verfahren verwendet werden, welches in "Calonder et. al - BRIEF: Computing a Local Binary Descriptor Very Fast. IEEE Transactions on Pattern Analysis and Machine Intelligence 2012" und "Zhang et. al - Binary stereo matching. ICPR 2012" beschrieben ist.

Um z. B. mittels des Census-Verfahrens eine gute Korrelation zwischen dem Korrelationsfenster (Kamerabild) und dem entsprechenden Suchfenster (Referenzbild) zu schaffen, werden sehr große Korrelationsfenster und sehr lange Census-Vektoren benötigt. Große Korrelationsfenster verschlechtern allerdings die Objektauflösung, wodurch kleine Objekte nicht mehr bzw. nur schlecht erkannt werden können. Zudem müssen bei großen Korrelationsfenstern viele Punktvergleiche durchgeführt werden, wodurch der Rechenaufwand für die Durchführung eines solchen Verfahrens stark steigt. Insbesondere kann aufgrund des großen Rechenaufwandes eine Durchführung des Verfahrens in Echtzeit nicht mehr möglich sein.

Die US 2015/0002628 A1 offenbart Systeme, Vorrichtungen, Verfahren und computerlesbare Medien für eine Tiefenkamera mit ML-Techniken zur Erkennung von Patches innerhalb eines SL-Musters. Das System kann ein Projektionsmodul enthalten, um ein ML-basiertes SL-Muster auf eine Szene zu projizieren, eine Kamera, um ein Bild des SL-Musters zu empfangen, das von der Szene reflektiert wird, ein Patch-Erkennungs- und Lokalisierungsmodul zum Erzeugen eines Deskriptor-Vektors für ein aus dem empfangenen Bild segmentiertes Patch und zum Abfragen eines ML-Systems mit dem Deskriptor-Vektor, wobei das ML-System zum Bereitstellen eines dem Deskriptor-Vektor zugeordneten Patch-Labels konfiguriert ist.

Die US 8 649 025 B2 offenbart ein Verfahren zum Erhalten dreidimensionaler Messungen von physikalischen Objekten. Es wird eine Vielzahl von Strahlungsmustern auf eine Szene projiziert, wobei die Muster eine Mehrzahl von unterschiedlichen geradlinigen Streifen umfassen, wobei die Streifen im wesentlichen konstante Intensität aufweisen, wobei die Streifen von jedem Muster hauptsächlich parallel sind, wobei die Streifen jedes Musters vorbestimmte Richtungen haben, wobei die Streifen der Muster andere Streifen an einer Vielzahl von Punkten schneiden, wobei die Vielzahl von Mustern mit unterscheidbaren Brennpunkten durchsetzt ist und wobei die Punkte an zufälligen Orten positioniert sind.

In "Rublee et. al - ORB: An efficient alternative to SIFT and SURF, in Computer Vision (ICCV), XP032101497" wird eine Weiterentwicklung des BRIEF-Verfahrens beschrieben, welche ein Binarisierungsschema verwendet, das nach einem fest vorgegebenen Ablauf erzeugt wird.

"Calonder et. al - BRIEF: Binary Robust Independent Elementary Features, Computer Vision, XP019150781" offenbart die Grundlagen des BRIEF-Deskriptors.

"Ylioinas Juha et. al -Leaming local image descriptors using binary decision trees", IEEE Winter Conference on applications of computer vision, XP032609970 offenbart Grundlagen des BRIEF-Deskriptors und eine zufällige Auswahl von möglichen Tests.

Es ist die der Erfindung zugrundeliegende Aufgabe, ein Verfahren zur dreidimensionalen Erfassung von Objekten anzugeben, welches eine zuverlässige Erfassung auch von kleinen Objekten ermöglicht und trotzdem mit einem geringen Rechenaufwand auskommt.

Diese Aufgabe wird durch ein Verfahren gemäß Anspruch 1 gelöst. Nachfolgend werden die Verfahrensschritte genauer erläutert.

Erfindungsgemäß zeichnet sich das Verfahren dadurch aus, dass bei dem Korre-lationsverfahren ein Binarisierungsschema auf das Korrelationsfenster und die Suchfenster angewendet wird, bei welchem jeweils die Punkte zumindest eines zufällig ausgewählten Punktpaares innerhalb des Korrelationsfensters und innerhalb der Suchfenster miteinander verglichen werden, wobei für das Korrelationsfenster und die Suchfenster jeweils ein Ergebnisvektor gebildet wird. Zudem zeichnet sich das erfindungsgemäße Verfahren dadurch aus, dass eine Korrelation des Ergebnisvektors des Korrelationsfensters und der Ergebnisvektoren der Suchfenster erfolgt, um das dem Korrelationsfenster entsprechende Suchfenster zu ermitteln. Bei der Korrelation kann z. B. der Ergebnisvektor des Korrelationsfensters mit den Ergebnisvektoren der Suchfenster verglichen werden.

Insofern werden zunächst innerhalb des Korrelationsfensters zufällig ausgewählte Punktpaare miteinander verglichen. So kann beispielsweise bei der Verwendung von Grauwertbildern die Helligkeit der zwei Punkte des Punktpaares verglichen werden, wobei in Abhängigkeit des Helligkeitsunterschieds ein Binärwert erzeugt wird, der in den Ergebnisvektor des Korrelationsfensters eingesetzt wird. Die Länge des Ergebnisvektors kann der Anzahl der Punktpaare bzw. der Anzahl der durchgeführten Punktvergleiche innerhalb des Korrelationsfensters entsprechen. Der Ergebnisvektor besitzt also zumindest die Länge Eins. Mittels derartiger Punktvergleiche kann z. B. eine Helligkeitsverteilung in dem Korrelationsfenster auf den Ergebnisvektor abgebildet werden.

Wie beim Korrelationsfenster in dem Kamerabild werden auch innerhalb der Such-fenster in dem Referenzbild die erläuterten Punktvergleiche durchgeführt, wobei in jedem Suchfenster dieselben Punktvergleiche durchgeführt werden, wie in dem Korrelationsfenster. Das heißt, es werden jeweils dieselben Relativpositionen in dem Korrelationsfenster und in den Suchfenstern miteinander verglichen. Folglich können die Ergebnisvektoren der Suchfenster und der Ergebnisvektor des Korrelationsfensters die gleiche Länge aufweisen.

Zudem können das Korrelationsfenster und die Suchfenster die gleiche Größe (das heißt die gleiche Fläche) besitzen. Das Korrelationsfenster und die Suchfenster können jeweils rechteckig und/oder deckungsgleich gewählt sein.

Die Erfindung macht sich die Erkenntnis zunutze, dass mittels der zufälligen Verteilung der Punktpaare ein Ergebnisvektor erzeugt werden kann, welcher das jeweilige Korrelationsfenster bzw. das jeweilige Suchfenster detailliert und aussagekräftig beschreibt. Es ist daher möglich, auch kleinere Korrelationsfenster zu verwenden, die den Rechenaufwand zur Durchführung des Verfahrens senken können. So können auch kleine Objekte sicher detektiert werden und in dem Referenzbild wiedergefunden werden, wodurch die Möglichkeit geschaffen wird, mittels Triangulation eine dreidimensionale Position des Objekts zu ermitteln. Das erfindungsgemäße Verfahren benötigt somit keine aufwändige Hardware, um auch kleine Objekte sicher zu erfassen.

Es können folglich Hardware-Kosten und Rechenzeit gespart werden, da das erfindungsgemäße Verfahren die von einer bestehenden Hardware erzeugten Daten besser ausnutzen kann.

Es kann also aufsetzend auf das beschriebene Korrelationsverfahren ein Tiefenwert bzw. ein Tiefenversatz für den zentralen Punkt des Korrelationsfensters und des dem Korrelationsfenster entsprechenden Suchfensters ermittelt werden, welcher in eine Tiefenkarte eingetragen wird. Der Tiefenwert bzw. die räumliche Position kann dabei, wie bereits beschrieben, mittels Triangulation berechnet werden. Besonders bevorzugt wird das zumindest eine Punktpaar mittels mehrerer Iterationen ausgewählt, wobei für jede Iteration das zumindest eine Punktpaar zufällig neu gewählt wird und dasjenige zumindest eine Punktpaar für das Korrelationsverfahren verwendet wird, welches die beste Zuordnung zwischen dem Korrelationsfenster und dem dem Korrelationsfenster entsprechenden Suchfenster erzielt.

Anders ausgedrückt werden verschiedene Anordnungen von Punktpaaren miteinander verglichen, um dasjenige Punktpaar bzw. diejenigen Punktpaare zu finden, die die beste Korrelation zwischen dem Korrelationsfenster und dem entsprechenden Suchfenster erreichen. Die Durchführung der Iterationen kann dabei bereits im Entwicklungsprozess, das heißt vor der Erfassung der Szene erfolgen. Hierzu können bei einer ersten Iteration beispielsweise 128 zufällig ausgewählte Punktpaare verwendet werden, wobei diese Punktpaare für das Korrelationsfenster und die Suchfenster verwendet werden und beispielsweise ein Grad der Korrelation zwischen dem Korrelationsfenster und dem dem Korrelationsfenster entsprechenden Suchfenster erfasst wird. Bei nachfolgenden Iterationen werden jeweils von neuem z. B. 128 Punktpaare zufällig ausgewählt und von neuem auf dasselbe Korrelationsfenster und dieselben Suchfenster (wie in der ersten Iteration) angewendet. Abschließend können für das Verfahren diejenigen Punktpaare verwendet werden, die den besten Grad der Korrelation zwischen dem Korrelationsfenster und dem dem Korrelationsfenster entsprechenden Suchfenster aufweisen.

Mittels der Iterationen kann die Zuverlässigkeit und Genauigkeit der Erfassung insbesondere von kleinen Objekten deutlich gesteigert werden, da durch die Iterationen eine Optimierung der ausgewählten Punktpaare erfolgt. Alternativ oder zusätzlich kann mit den Punktpaaren jeder Iteration nicht nur ein Korrelationsfenster untersucht werden, sondern es können auch eine Vielzahl von Korrelationsfenstern, bevorzugt alle möglichen Korrelationsfenster (und damit die zugehörigen Suchfenster), untersucht werden, um die Punktpaare zu finden, die die beste Zuordnung zwischen dem Korrelationsfenster und dem zugehörigen Suchfenster erzielen. Aufgrund der so erreichbaren besseren Zuordnung (d. h. Korrelation) zwischen dem Korrelationsfenster und dem dem Korrelationsfenster entsprechenden Suchfenster kann auch eine dichtere Tiefenkarte erzeugt werden, die zudem ein geringeres Rauschen aufweisen kann.

Vorteilhafte Weiterbildungen der Erfindung sind der Beschreibung, den Unteransprüchen sowie den Zeichnungen zu entnehmen.

Gemäß einer ersten vorteilhaften Ausführungsform wird das zumindest eine Punktpaar vor der Erfassung der Szene, insbesondere zufällig, ausgewählt, wobei das Punktpaar für jedes Fenster gleich ist. Anders ausgedrückt kann das Punktpaar schon im Entwicklungsprozess eines Systems zur dreidimensionalen Erfassung von Objekten, welches das erfindungsgemäße Verfahren ausführt, ausgewählt oder festgelegt werden. Das Punktpaar oder die Punktpaare bleibt/bleiben dann für die Lebensdauer des Systems gleich. Dies bedeutet, dass der Aufwand zur Festlegung des Punktpaars in den Entwicklungsprozess des Systems verlegt wird, wodurch z. B. keine Rechenleistung des Systems während der Durchführung des Verfahrens aufgewendet werden muss.

Bevorzugt werden mehrere Punktpaare verwendet, welche uniform innerhalb des Korrelationsfensters verteilt sind. Anders ausgedrückt verteilen sich die Punkte der Punktpaare im Wesentlichen gleichmäßig über die Fläche des Korrelationsfensters und damit auch über die Fläche der Suchfenster. Dies bedeutet, dass die Punktpaare zwar zufällig (das heißt, nicht entsprechend einer vorbestimmten Regel) gewählt werden, jedoch trotzdem die genannte Randbedingung der uniformen Verteilung erfüllen müssen, und somit gleichmäßig innerhalb des Korrelationsfensters verteilt sind.

Gemäß einer weiteren vorteilhaften Ausführungsform werden zumindest 128 Punktpaare ausgewählt. Innerhalb des Korrelationsfensters und der Suchfenster werden also z. B. jeweils dieselben 128 Punktvergleiche durchgeführt. Dementsprechend besitzen die Ergebnisvektoren dann z. B. die Länge 128 Bit.

Gemäß einer alternativen Ausführungsform kann auch eine Obergrenze der Anzahl der Punktpaare definiert sein. So können beispielsweise maximal 64, 128, 256 oder 512 Punktpaare ausgewählt werden. Insbesondere bietet die Auswahl von genau 128 Punktpaaren einen guten Kompromiss zwischen einer aussagekräftigen Beschreibung des Korrelationsfensters bzw. der Suchfenster durch die Ergebnisvektoren und der benötigten Rechenleistung.

Bei der Wahl der Punktpaare kann ein jeweiliger Punkt (d. h. ein Pixel) auch mit mehreren anderen Punkten verglichen werden. Anders ausgedrückt kann ein Punkt auch in einem oder mehreren anderen Punktpaaren enthalten sein.

Weiter bevorzugt werden die Iterationen anhand eines Kamerabildes und eines Referenzbildes aus dem Beleuchtungsmuster mindestens einer bekannten Szene durchgeführt. Unter einer bekannten Szene ist zu verstehen, dass zumindest ein Teil, vorzugsweise alle in der Szene vorhandenen Objekte und damit auch die auf den Bildern abgebildeten Objekte bekannt sind. Dies bedeutet, dass die räumlichen Positionen der Objekte ebenfalls bekannt sind, wodurch das einem jeweiligen Korrelationsfenster entsprechende Suchfenster im Vorhinein auch bekannt ist. Daraus ergibt sich die Möglichkeit, die Richtigkeit der bei den Iterationen erzielten Ergebnisse zu überprüfen. Die Iterationen können also auch als Simulation bezeichnet werden, wobei die Simulation - wie erwähnt - bereits in der Entwicklungsphase erfolgen kann und insbesondere rein in Software durchgeführt werden kann. Die Verwendung einer bekannten Szene ermöglicht es, das Ergebnis der Iterationen nochmals zu verbessern, wodurch eine Zuordnung zwischen Korrelationsfenster und entsprechend dem Suchfenster weiter optimiert werden kann, was wiederum in einer verbesserten Tiefenkarte und einem geringeren Rauschen resultiert.

Gemäß der Erfindung wird die Szene mit einem Muster beleuchtet, welches bevorzugt zumindest lokal selbstunähnlich ist. Das heißt, die Szene wird mit einem Muster beleuchtet, dessen Musterstrukturen sich frühestens in einem gewissen Abstand oder außerhalb des Suchbereiches wiederholen. Die selbstunähnlichen Musterstrukturen können es vereinfachen, einander entsprechende Bildbereiche in dem ersten Kamerabild und dem Referenzbild zu identifizieren, wodurch die Korrelation des Korrelationsfensters und des dem Korrelationsfenster entsprechenden Suchfensters erleichtert werden kann. Der Einsatz von periodischen Strukturen oder Linienmustern ist aber grundsätzlich nicht ausgeschlossen.

Bevorzugt erfolgt die Beleuchtung mit infrarotem Licht, insbesondere infrarotem Laserlicht, so dass die Beleuchtung für das menschliche Auge nicht wahrnehmbar ist. Die Beleuchtung kann z.B. nur in dem Zeitraum erfolgen, in dem die Bilderfassungseinrichtungen die Szene erfassen. Insbesondere kann die Szene mit zumindest zwei Beleuchtungseinrichtungen aus zwei verschiedenen Raumrichtungen beleuchtet werden. Auf diese Weise kann der Einfluss von spiegelnden Oberflächen reduziert werden. Außerdem kann das Muster der Beleuchtung räumlich und zeitlich variieren. Die zeitliche Variation muss erfüllt sein. Die räumliche Variation ist optional.

Insbesondere bei der Durchführung von Iterationen zur Ermittlung der optimalen Punktpaare können die Punktpaare an die Beleuchtung angepasst werden. Dabei kann die Kombination aus Iterationen und selbstunähnlicher Beleuchtung einen stark synergistischen Effekt hervorrufen, der die Zuverlässigkeit und Genauigkeit (d.h. den Grad) der Korrelation des Korrelationsfensters und des zugehörigen Suchfensters stark steigern kann.

Gemäß einer weiteren vorteilhaften Ausführungsform wird bei den Iterationen auch das Beleuchtungsmuster verändert. Neben der Auswahl der Punktpaare kann somit ein weiterer Parameter verändert werden, welcher eine noch bessere Optimierung ermöglicht. Grundsätzlich kann die Optimierung bei den Iterationen nach der besten Korrelation zwischen dem Korrelationsfenster und dem dem Korrelationsfenster entsprechenden Suchfenster erfolgen. Alternativ können auch diejenigen Punktpaare und/oder dasjenige Muster der Beleuchtung ausgewählt werden, die die dichteste Tiefenkarte erzeugen, also die für die gesamte Szene die meisten gültigen Tiefeninformationen liefern und/oder den geringsten Fehler in den Tiefenkarten erzeugen.

Gemäß einer weiteren vorteilhaften Ausführungsform umfassen das Korrelationsfenster und die Suchfenster die gleiche Fläche, wobei die Fläche kleiner als 0,5 %, bevorzugt kleiner als 0,1 %, besonders bevorzugt kleiner als 0,01 %, der Fläche des Kamerabildes und/oder des Referenzbildes ist. Beispielsweise können die Korrelationsfenster und die Suchfenster eine Größe von 5 x 5 Pixel aufweisen. Bei einer VGA-Auflösung der Bilderfassungseinrichtung (640 x 480 Pixel) entsprechen 5 x 5 Pixel 0,0081 % der Fläche des jeweiligen Bildes. Alternativ kann die Größe des Korrelationsfensters und der Suchfenster so gewählt werden, dass beispielsweise ein 40 mm großes Objekt in der Szene noch erkannt werden kann.

Das Korrelationsfenster und das Suchfenster können zum Beispiel rechteckig oder quadratisch ausgebildet sein. Bevorzugt sind das Korrelationsfenster und die Suchfenster kreisförmig ausgebildet. Dies bedeutet, dass die Punktpaare in dem Korrelationsfenster und den Suchfenstern nur innerhalb einer kreisförmigen Fläche angeordnet werden. Beispielsweise kann die kreisförmige Fläche einen Radius von 2,3 Pixeln aufweisen. Durch die Verwendung einer kreisförmigen Fläche ergibt sich eine Schärfung der Kanten von kleinen Objekten, was die Fähigkeit des Verfahrens erhöht, insbesondere kleine Objekte gut zu erfassen. Ähnlich wirkt zum Beispiel die Verwendung rechteckiger, insbesondere quadratischer, Korrelations- bzw. Suchfenster, in denen dann nur solche Pixel ausgewählt werden, die innerhalb eines entsprechenden Radius vom jeweiligen Fenstermittelpunkt entfernt sind. Der Kreisradius kann sich dabei aus der Ausdehnung der minimalen Objektauflösung in Pixel ergeben.

Erfindungsgemäß erfolgt die Korrelation des Ergebnisvektors des Korrelationsfensters und der Ergebnisvektoren der Suchfenster anhand der Hamming-Distanz der Ergebnisvektoren. Die Hamming-Distanz kann als Anzahl der unterschiedlichen Stellen in jeweils zwei Ergebnisvektoren definiert werden. Die bei dem Verfahren verwendeten Ergebnisvektoren umfassen lediglich Binärwerte, so dass der Ergebnisvektor des Korrelationsfensters und der Ergebnisvektor eines Suchfensters, welcher sich an drei Positionen von dem Ergebnisvektor des Korrelationsfensters unterscheidet, eine Hamming-Distanz von Drei aufweist. Dasjenige Suchfenster, dessen Ergebnisvektor die geringste Hamming-Distanz zu dem Ergebnisvektor des Korrelationsfensters aufweist, wird als das dem Korrelationsfenster entsprechende Suchfenster angesehen.

Erfindungsgemäß wird ein Aggregat über mehrere Hamming-Distanzen gebildet, zum Beispiel über 3 x 3 Hamming-Distanzen für benachbarte Korrelationsfenster. Zudem erfolgt bevorzugt die Korrelation anhand des Aggregats. Mittels des Aggregats, das heißt der Aufsummierung von z. B. neun Hamming-Distanz-Werten, erfolgt eine Glättung innerhalb des beispielhaft gewählten 3 x 3-Bereiches, wodurch eine zuverlässigere Objekterkennung erreicht werden kann.

Bevorzugt wird das Kamerabild rektifiziert und/oder mit einem Rauschfilter gefiltert. Das Referenzbild ist bereits verzeichnet abgespeichert, entsprechend der Empfangsoptik. Bevorzugt werden auch die Abbildungseffekte der Empfangsoptik auf das Referenzbild angewandt und abgespeichert (z. B. Point Spread Function / Punktspreizfunktion). Beim Rektifizieren werden geometrische Verzerrungen in den Bilddaten eliminiert. Auf diese Weise können die Bilder derart geformt werden, dass nach dem Rektifizieren die Epipolarlinie für jedes Bild entlang der Pixel einer Bildzeile verläuft.

Die Zentren des Referenzbildes und das von den Bilderfassungseinrichtung erfassten Bildes (bzw. der entsprechenden erfassten Bereiche) sowie eine Position, das heißt ein Punkt die/der durch ein Objekt definiert wird, spannen gemeinsam eine sogenannte Epipolarebene auf. Die Epipolarebene schneidet das erste und das zweite Bild jeweils in einer Geraden, der sogenannte Epipolarlinie.

Der Rauschfilter ist bevorzugt ein Filter, der beispielsweise jeweils 3 x 3 Pixel verarbeitet, und ist beispielsweise als Tiefpass oder Filter, der eine Gaußsche Glättung durchführt, ausgebildet. Dadurch wird die Fähigkeit, insbesondere kleine Objekte zu erkennen, nochmals erhöht. Zusammen mit dem Rektifizieren und/oder dem Filtern können die Bilder zudem in Grauwertbilder gewandelt werden, welche für jeden Pixel einen Helligkeitswert umfassen.

Bevorzugt werden die Suchfenster nur entlang der Epipolarlinie des Referenzbildes angeordnet. Hierdurch kann der Aufwand zur Berechnung einer Vielzahl von Suchfenstern reduziert werden, da nur Suchfenster entlang der Epipolarlinie des jeweiligen Objekts bzw. entlang der zum Zentrum des jeweiligen Korrelationsfensters gehörigen Epipolarlinie mit dem Korrelationsfenster verglichen werden müssen. Aufgrund der Rektifizierung der Bilder liegen dem Korrelationsfenster entsprechende Suchfenster dann zum Beispiel nur auf der jeweiligen Epipolarlinie. Das Verfahren kann für sämtliche möglichen Korrelationsfenster in dem ersten Bild wiederholt werden, um für jeden Bildpunkt (das heißt dem jeweiligen Zentrumspunkt des Korrelationsfensters) ein entsprechendes Suchfenster zu finden, womit sich mittels Triangulation (nach und nach) für jeden Bildpunkt der Bilder eine Tiefeninformation berechnen lässt, die in eine Tiefenkarte eingetragen werden kann.

In Weiterbildung der Erfindung ist es vorgesehen, für das Referenzbild die Ergebnisvektoren schon zur Entwicklungszeit oder Produktionszeit vorab zu berechnen. Das Referenzbild wird im Entwicklungsprozess anhand des Beleuchtungsmusters erzeugt und abgespeichert. Dadurch kann das Referenzbild bereits bei der Herstellung der Bilderfassungseinrichtung bereitgestellt werden.

Weiterer Gegenstand der Erfindung ist ein System zur dreidimensionalen Erfassung von Objekten mit einer Bilderfassungseinrichtung, einer Beleuchtungseinrichtung und einer Recheneinheit. Das erfindungsgemäße System zeichnet sich dadurch aus, dass es ausgebildet ist, ein Verfahren der vorstehend erläuterten Art durchzuführen.

Es können auch mehrere Beleuchtungseinrichtungen vorgesehen sein. Bei der Bilderfassungseinrichtung kann es sich um eine Digitalkamera handeln, die Grauwertbilder liefert.

Zusätzlich kann das System auch eine zweite Kamera bzw. eine zweite Bilderfassungseinrichtung aufweisen. In diesem Fall wird das Verfahren zunächst mit einer Kamera und dem Referenzbild ausgeführt, wobei hier bereits eine Erfassung von Objekten gemäß dem oben beschriebenen Verfahren erfolgt und anhand der erfassten Objekte eine Tiefenkarte erzeugt wird. Anschließend wird das Verfahren mit einer weiteren Kombination der Kameras wiederholt, um gegebenenfalls fehlende Informationen in der Tiefenkarte bzw. fehlende Informationen zu Objekten zu ergänzen. Eine solche zweite oder dritte Kamera kann Vorteile bieten, sofern in der Szene abgeschattete Bereiche vorhanden sind, die beispielsweise nur von einer Kamera erfasst werden. Nachfolgend wird die Erfindung rein beispielhaft unter Bezugnahme auf die Zeichnungen beschrieben.

Es zeigen:
Fig. 1 ein erfindungsgemäßes System zur dreidimensionalen Erfassung von Objekten;
Fig. 2 ein Kamerabild und ein Referenzbild;
Fig. 3 ein beispielhaftes selbstunähnliches Beleuchtungsmuster;
Fig. 4 ein rechteckiges Korrelationsfenster; und
Fig. 5 ein kreisförmiges Korrelationsfenster.

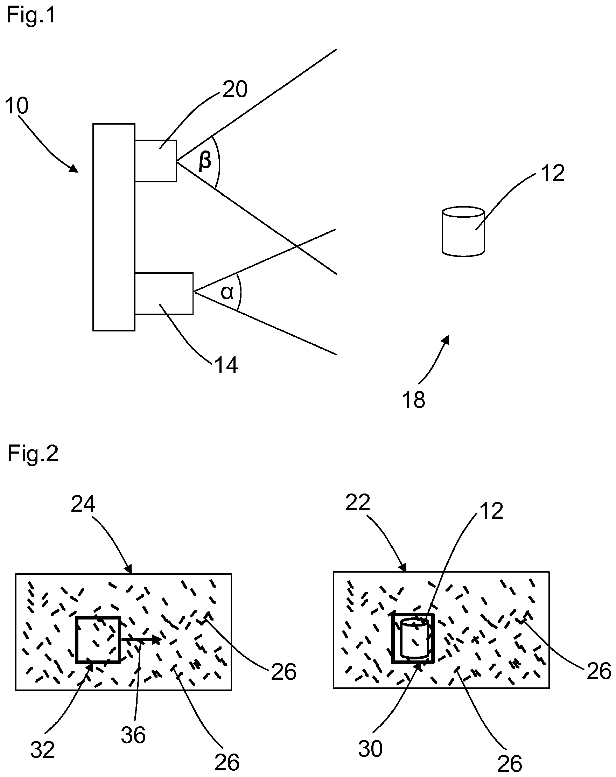

Fig. 1 zeigt ein System 10 zur dreidimensionalen Erfassung eines Objekts 12. Das System 10 weist eine Kamera 14 und eine Beleuchtungseinrichtung 20 auf. Die Kamera 14 und die Beleuchtungseinrichtung 20 sind auf eine Szene 18 gerichtet, in welcher sich das Objekt 12 befindet. Die Szene 18 wird von der Kamera 14 von einer anderen Position aus erfasst als von der Beleuchtungseinrichtung 20 beleuchtet. Die Kamera 14 weist einen Betrachtungswinkel α auf, innerhalb dessen die Szene 18 erfasst werden kann.

Beispielsweise ist neben der Kamera 14 die Beleuchtungseinrichtung 20 angeordnet, die Laserlicht im Infrarotbereich abstrahlt. Die Beleuchtungseinrichtung 20 strahlt das Laserlicht in einen Winkelbereich β ab, der größer als der Winkel α ist. Das System 10 umfasst zudem eine nicht dargestellte Recheneinheit, die den nachfolgend erläuterten Betrieb des Systems 10 durchführt und überwacht. Im Betrieb bestrahlt die Beleuchtungseinrichtung 20 die Szene 18 und damit auch das Objekt 12, während die Kamera 14 Bilder der Szene 18 erfasst.

Ein von der Kamera 14 erfasstes Kamerabild 22 sowie ein Referenzbild 24 aus dem Beleuchtungsmuster sind in Fig. 2 gezeigt. In dem Kamerabild 22 ist das Bild des Objekts 12 etwa in der Mitte zu erkennen. Die Such- und Korrelationsfenster sind an jeweils gleichen Bildkoordinaten in beiden Bildern. Von dieser Koordinate ausgehend wird im Referenzbild nach rechts gesucht.

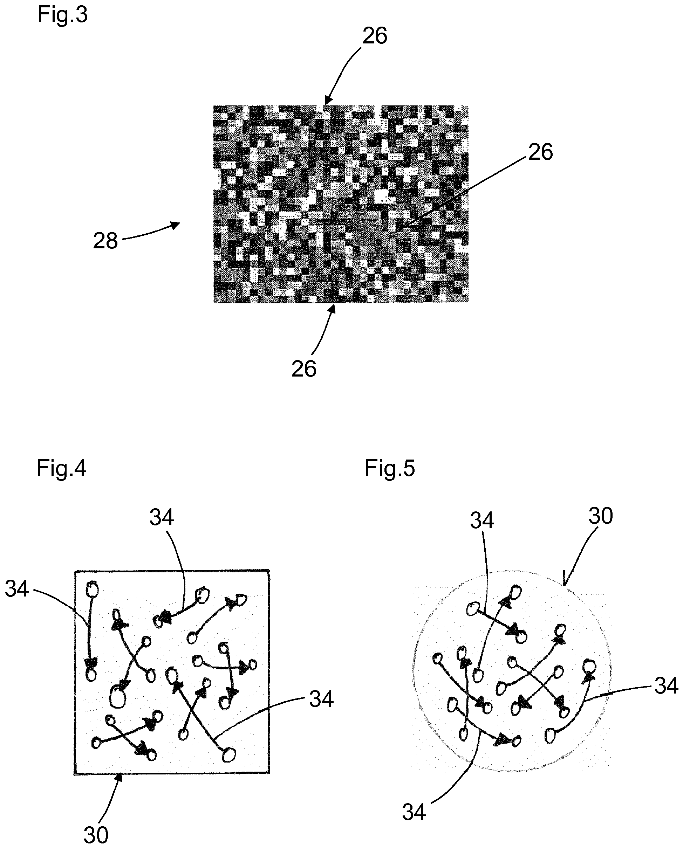

In dem Kamerabild 22 sind Beleuchtungspunkte 26 zu erkennen, die von der Beleuchtungseinrichtung 20 in die Szene 18 projiziert werden. Die Beleuchtungspunkte 26 bilden ein selbstunähnliches Beleuchtungsmuster 28, welches genauer in Fig. 3 dargestellt ist.

Das in Fig. 3 gezeigte Beleuchtungsmuster 28 zeigt eine zweidimensionale Anordnung von Beleuchtungspunkten 26 mit unterschiedlicher Helligkeit. Das Beleuchtungsmuster 28 weist hier insbesondere keine periodische Struktur und kein Linienmuster auf, sondern ist, wie erwähnt selbstunähnlich.

Zum leichteren Verständnis wird das Objekt 12 sowohl in der Szene 18 (d. h. dem Gegenstandsraum) als auch in dem Bild 22 mit dem Bezugszeichen 12 bezeichnet. Dabei bezieht sich das Bezugszeichen 12 in dem Bild 22 auf die dortige jeweilige Abbildung des Objekts 12, also auf den Bildraum des ersten Bildes 22.

In Fig. 2 ist um das Objekt 12 in dem Kamerabild 22 ein rechteckiges Korrelationsfenster 30 gelegt. In dem Referenzbild 24 ist ein Suchfenster 32 eingezeichnet. Das Korrelationsfenster 30 und die Suchfenster 32 sind grundsätzlich identisch aufgebaut und genauer in den Fig. 4 und 5 gezeigt. Im Folgenden soll jeweils nur von einem Korrelationsfenster 30 gesprochen werden, die Ausführungen gelten aber entsprechend für die Suchfenster 32.

Fig. 4 zeigt ein rechteckiges Korrelationsfenster 30, innerhalb welchem eine Vielzahl von Punktpaaren 34 eingezeichnet ist. Die Anordnung der Punktpaare 34 wurde während der Entwicklung des Systems 10 durch eine Vielzahl von Iterationen (nach einem Optimierungsverfahren) an das Beleuchtungsmuster 28 angepasst, so dass auch besonders kleine Objekte 12 gut erkannt werden können. Innerhalb des Korrelationsfensters 30 wird ein Binarisierungsschema angewendet, welches durch die Punktpaare 34 definiert wird.

Jedes Punktpaar 34 weist zur Definition des Binarisierungsschemas eine durch einen Pfeil gekennzeichnete "Richtung" auf, wobei durch die Richtung die Reihenfolge eines Vergleichs des Punktpaars festgelegt wird. Ist beispielsweise der Punkt bzw. Pixel im Ursprung des Pfeils heller als der Punkt am Ende des Pfeils, so wird für den Vergleich dieses Punktpaares 34 als Ergebnis eine Eins erzeugt. Ansonsten ist das Ergebnis des Vergleichs eine Null.

Das Ergebnis des Binarisierungsschemas ist jeweils ein Ergebnisvektor für das Korrelationsfenster 30 und die Suchfenster 32, welcher für jeden Paarvergleich jedes Punktpaars 34 entweder eine Null oder eine Eins enthält, wobei der im Ergebnisvektor enthaltene Wert das Ergebnis des Vergleichs des jeweiligen Punkpaares 34 ist.

Ein solches Binarisierungsschema kann entweder auf ein rechteckiges Korrelationsfenster 30, wie in Fig. 4 gezeigt, oder auf ein kreisförmiges Korrelationsfenster 30, wie in Fig. 5 gezeigt, angewendet werden. Es können auch rechteckige oder quadratische Korrelationsfenster und Suchfenster zum Einsatz kommen, in denen aber nur solche Pixel ausgewertet werden, die innerhalb eines Kreisradius vom jeweiligen Fenstermittelpunkt entfernt sind. Der Kreisradius kann sich dabei aus der minimalen Objektauflösung in Pixel ergeben.

Um beispielsweise bei den in Fig. 2 gezeigten Bildern 22, 24 ein Suchfenster 32 zu ermitteln, in welchem ebenfalls das Objekt 12 vorhanden ist, wird mittels der Punktpaare 34 das Binarisierungsschema auf das Korrelationsfenster 30 angewandt und so ein Ergebnisvektor für das Korrelationsfenster berechnet. Anschließend wird für verschiedene Suchfenster 32, die entlang einer Epipolarlinie 36 liegen, die in Fig. 2 nur als Pfeil angedeutet ist, jedes mögliche Suchfenster 32 ausgewertet, das heißt, es wird dasselbe Binarisierungsschema wie für das Korrelationsfenster 30 auf jedes Suchfenster 32 angewandt. Dementsprechend wird für jedes Suchfenster 32 ein eigener Ergebnisvektor berechnet.

Dasjenige Suchfenster 32, dessen Ergebnisvektor die geringste Hamming-Distanz zu dem Ergebnisvektor des Korrelationsfensters 30 besitzt, wird als das dem Korrelationsfenster entsprechende Suchfenster angesehen, wobei dann mit großer Wahrscheinlichkeit davon ausgegangen werden kann, dass innerhalb dieses Suchfensters 32 ebenfalls der auf das Objekt 12 abgebildete Musterausschnitt zu sehen ist. Das dem Korrelationsfenster 30 entsprechende Suchfenster 32 ist demnach das Suchfenster 32, welches den dem Objekt 12 entsprechenden Musterausschnitt enthält.

Da nun die Position des Objekts 12 sowohl in dem Kamerabild 22 als auch in dem Referenzbild 24 bekannt ist, kann mittels eines Triangulationsverfahrens der Abstand des Objekts 12 von dem System 10 in der Szene 18 ermittelt werden und in eine Tiefenkarte eingetragen werden. Für weitere Objekte (nicht gezeigt) kann das Verfahren entsprechend wiederholt werden.

### Bezugszeichenliste:

10 System
12 Objekt, Abbild des Objekts
14 Kamera
18 Szene
20 Beleuchtungseinrichtung
22 Kamerabild
24 Referenzbild
26 Beleuchtungspunkt
28 Beleuchtungsmuster
30 Korrelationsfenster
32 Suchfenster
34 Punktpaar
36 Epipolarlinie
α Betrachtungswinkel
β Winkelbereich

## Patentansprüche

1. Verfahren zur dreidimensionalen Erfassung von Objekten (12), bei welchem
- eine Szene (18) mittels einer Bilderfassungseinrichtung (14) erfasst wird, wobei ein Kamerabild (22) erzeugt wird,
- die Szene mit einem Muster (28) beleuchtet wird, welches zumindest lokal selbstunähnlich ist, wobei ein Bild als Referenzbild entsprechend dem Muster erzeugt wird,
- ein Korrelationsfenster (30) als Ausschnitt des Kamerabildes (22) festgelegt wird,
- mehrere Suchfenster (32) als Ausschnitte des eingelernten Referenzbildes (24) festgelegt werden, wobei verschiedene Suchfenster (32) verschiedene Bereiche des Referenzbildes (24) wiedergeben,
- mittels eines Korrelationsverfahrens das dem Korrelationsfenster (30) entsprechende Suchfenster (32) ermittelt wird,
**dadurch gekennzeichnet, dass**
- bei dem Korrelationsverfahren ein Binarisierungsschema auf das Korrelationsfenster (30) und die Suchfenster (32) angewendet wird, bei welchem jeweils die Punkte zumindest eines zufällig ausgewählten Punktpaares (34) innerhalb des Korrelationsfensters (30) und innerhalb der Suchfenster (32) miteinander verglichen werden, wobei für das Korrelationsfenster (30) und die Suchfenster (32) jeweils ein Ergebnisvektor gebildet wird,
- eine Korrelation des Ergebnisvektors des Korrelationsfensters (30) und der Ergebnisvektoren der Suchfenster (32) erfolgt, um das dem Korrelationsfenster (30) entsprechende Suchfenster (32) zu ermitteln, und
- das zumindest eine Punktpaar (34) mittels mehrerer Iterationen ausgewählt wird, wobei für jede Iteration das zumindest eine Punktpaar (34) zufällig neu gewählt wird und dasjenige zumindest eine Punktpaar (34) für das Korrelationsverfahren verwendet wird, welches die beste Zuordnung zwischen dem Korrelationsfenster (30) und dem dem Korrelationsfenster (30) entsprechenden Suchfenster (32) erzielt,
wobei die Korrelation des Ergebnisvektors des Korrelationsfensters (30) und der Ergebnisvektoren der Suchfenster (32) anhand der Hamming-Distanz der Ergebnisvektoren erfolgt,
wobei ein Aggregat über mehrere Hamming-Distanzen für benachbarte Korrelationsfenster gebildet wird und anhand des
Aggregats die Korrelation erfolgt,
wobei das Kamerabild (22) rektifiziert wird.

2. Verfahren nach Anspruch 1,
**dadurch gekennzeichnet, dass**
das zumindest eine Punktpaar (34) vor der Erfassung der Szene (18) ausgewählt wird, wobei das Punktpaar (34) für jedes Fenster (30, 32) gleich ist.

3. Verfahren nach Anspruch 1 oder 2,
**dadurch gekennzeichnet, dass**
mehrere Punktpaare (34) verwendet werden, welche uniform innerhalb des Korrelationsfensters (30) verteilt sind.

4. Verfahren nach zumindest einem der vorstehenden Ansprüche,
**dadurch gekennzeichnet, dass**
zumindest 128 Punktpaare (34) ausgewählt werden.

5. Verfahren nach zumindest einem der vorstehenden Ansprüche,
**dadurch gekennzeichnet, dass**
die Iterationen anhand eines Kamerabildes (22) und eines Referenzbildes (24) mindestens einer bekannten Szene (18) durchgeführt werden.

6. Verfahren nach Anspruch 5,
**dadurch gekennzeichnet, dass**
bei den Iterationen auch das Beleuchtungsmuster (28) verändert wird.

7. Verfahren nach zumindest einem der vorstehenden Ansprüche,
**dadurch gekennzeichnet, dass**
das Korrelationsfenster (30) und die Suchfenster (32) die gleiche Fläche umfassen, wobei die Fläche kleiner als 0,5 %, bevorzugt kleiner als 0,1 %, besonders bevorzugt kleiner als 0,01 %, der Fläche des Kamerabildes und/oder des Referenzbildes (22, 24) ist.

8. Verfahren nach zumindest einem der vorstehenden Ansprüche,
**dadurch gekennzeichnet, dass**
das Korrelationsfenster (30) und die Suchfenster (32) kreisförmig ausgebildet sind.

9. Verfahren nach Anspruch 1,
**dadurch gekennzeichnet, dass** das Aggregat über 3x3 Hamming-Distanzen, gebildet wird und anhand des Aggregats die Korrelation erfolgt.

10. Verfahren nach zumindest einem der vorstehenden Ansprüche,
**dadurch gekennzeichnet, dass**
das Kamerabild (22) und das Referenzbild (24) rektifiziert werden und/oder mit einem Rauschfilter gefiltert werden.

11. Verfahren nach zumindest einem der vorstehenden Ansprüche,
**dadurch gekennzeichnet, dass**
die Suchfenster (32) nur entlang der Epipolarlinie (36) des Referenzbildes (24) angeordnet werden.

12. Verfahren nach zumindest einem der vorstehenden Ansprüche,
**dadurch gekennzeichnet, dass**
das Referenzbild (24) zur Entwicklungszeit oder Produktionszeit erstellt wird.

13. System (10) zur dreidimensionalen Erfassung von Objekten (12) mit einer Bilderfassungseinrichtung (14), einer Beleuchtungseinrichtung (20) und einer Recheneinheit,
**dadurch gekennzeichnet, dass**
das System (10) ausgebildet ist, ein Verfahren gemäß zumindest einem der vorstehenden Ansprüche durchzuführen.

## Claims

1. Method for the three-dimensional detection of objects (12), in which
- a scene (18) is detected by means of an image acquisition device (14), a camera image (22) being generated,
- the scene is illuminated with a pattern (28) which is at least locally self-dissimilar, wherein an image is generated as a reference image corresponding to the pattern,
- a correlation window (30) is defined as a section of the camera image (22),
- a plurality of search windows (32) are defined as sections of the taught-in reference image (24), different search windows (32) representing different regions of the reference image (24),
- the search window (32) corresponding to the correlation window (30) is determined by means of a correlation method,
**characterised in that**
- in the correlation method, a binarization scheme is applied to the correlation window (30) and the search windows (32), in which the points of at least one randomly selected pair of points (34) within the correlation window (30) and within the search windows (32) are respectively compared with one another, a result vector being formed for each of the correlation window (30) and the search windows (32),
- the result vector of the correlation window (30) and the result vectors of the search windows (32) are correlated in order to determine the search window (32) corresponding to the correlation window (30), and
- the at least one pair of points (34) is selected by means of a plurality of iterations, wherein for each iteration the at least one pair of points (34) is newly selected at random and that at least one pair of points (34) is used for the correlation method which achieves the best assignment between the correlation window (30) and the search window (32) corresponding to the correlation window (30), wherein the correlation of the result vector of the correlation window (30) and the result vectors of the search windows (32) takes place on the basis of the Hamming distance of the result vectors,
wherein an aggregate is formed over a plurality of Hamming distances for adjacent correlation windows and the correlation takes place on the basis of the aggregate,
wherein the camera image (22) is rectified.

2. Method according to claim 1, **characterized in that** the at least one pair of points (34) is selected before the scene (18) is detected, the pair of points (34) being the same for each window (30, 32).

3. Method according to claim 1 or 2, **characterized in that** a plurality of point pairs (34) uniformly distributed within the correlation window (30) are used.

4. Method according to at least one of the above claims, **characterized in that** at least 128 pairs of points (34) are selected.

5. Method according to at least one of the preceding claims, **characterized in that** the iterations are performed on the basis of a camera image (22) and a reference image (24) of at least one known scene (18).

6. Method according to claim 5, **characterized in that** the illumination pattern (28) is also changed during the iterations.

7. Method according to at least one of the preceding claims, **characterized in that** the correlation window (30) and the search windows (32) comprise the same area, the area being smaller than 0.5%, preferably smaller than 0.1%, particularly preferably smaller than 0.01%, of the area of the camera image and/or the reference image (22, 24).

8. Method according to at least one of the above claims, **characterized in that** the correlation window (30) and the search windows (32) are circular.

9. Method according to claim 1, **characterized in that** the aggregate is formed over 3x3 Hamming distances, and the correlation takes place on the basis of the aggregate.

10. Method according to at least one of the above claims, **characterized in that** the camera image (22) and the reference image (24) are rectified and/or filtered with a noise filter.

11. Method according to at least one of the above claims, **characterized in that** the search windows (32) are arranged only along the epipolar line (36) of the reference image (24).

12. Method according to at least one of the above claims, **characterized in that** the reference image (24) is produced at development time or production time.

13. System (10) for three-dimensional detection of objects (12) comprising an image detection device (14), an illumination device (20) and a computing unit, **characterized in that** the system (10) is adapted to perform a method according to at least one of the preceding claims.

## Revendications

1. Procédé pour la détection tridimensionnelle d'objets (12), dans lequel
- une scène (18) est détectée au moyen d'un dispositif d'acquisition d'image (14), une image de caméra (22) étant générée,
- la scène est éclairée avec un motif (28) qui est au moins localement auto-dissimilaire, dans lequel une image est générée comme image de référence correspondant au motif,
- une fenêtre de corrélation (30) est définie comme une section de l'image de caméra (22),
- une pluralité de fenêtres de recherche (32) sont définies comme des sections de l'image de référence apprise (24), différentes fenêtres de recherche (32) représentant différentes régions de l'image de référence (24),
- la fenêtre de recherche (32) correspondant à la fenêtre de corrélation (30) est déterminée au moyen d'un procédé de corrélation,
**caractérisé en ce que**
- dans le procédé de corrélation, un schéma de binarisation est appliqué la fenêtre de corrélation (30) et aux fenêtres de recherche (32), dans lequel les points d'au moins une paire de points (34) choisis au hasard dans la fenêtre de corrélation (30) et dans les fenêtres de recherche (32) sont respectivement comparés entre eux, un vecteur de résultat étant formé pour chacune des fenêtres de corrélation (30) et de recherche (32),
- le vecteur de résultat de la fenêtre de corrélation (30) et les vecteurs de résultat des fenêtres de recherche (32) sont corrélés afin de déterminer la fenêtre de recherche (32) correspondant à la fenêtre de corrélation (30), et
- au moins une paire de points (34) est sélectionnée au moyen d'une pluralité d'itérations, dans laquelle, pour chaque itération, au moins une paire de points (34) est nouvellement sélectionnée au hasard et qu'au moins une paire de points (34) est utilisée pour le procédé de corrélation qui réalise la meilleure affectation entre la fenêtre de corrélation (30) et la fenêtre de recherche (32) correspondante à la fenêtre de corrélation (30),
dans laquelle la corrélation du vecteur de résultat de la fenêtre de corrélation (30) et des vecteurs de résultat des fenêtres de recherche (32) a lieu sur la base de la distance Hamming des vecteurs de résultat,
dans laquelle un agrégat est formé sur une pluralité de distances de Hamming pour des fenêtres de corrélation adjacentes et la corrélation a lieu sur la base de l'agrégat,
dans laquelle l'image de caméra (22) est rectifiée.

2. Procédé selon la revendication 1, **caractérisé en ce que** l'au moins une paire de points (34) est sélectionnée avant la détection de la scène (18), la paire de points (34) étant la même pour chaque fenêtre (30, 32).

3. Procédé selon la revendication 1 ou 2, **caractérisé en ce qu'**une pluralité de paires de points (34) réparties uniformément dans la fenêtre de corrélation (30) est utilisée.

4. Procédé selon au moins l'une des revendications précédentes, **caractérisé en ce qu'**au moins 128 paires de points (34) sont sélectionnées.

5. Procédé selon au moins l'une des revendications précédentes, **caractérisé en ce que** les itérations sont effectuées sur la base d'une image caméra (22) et d'une image de référence (24) d'au moins une scène connue (18).

6. Procédé selon la revendication 5, **caractérisé en ce que** le diagramme d'éclairage (28) est également modifié pendant les itérations.

7. Procédé selon au moins l'une des revendications précédentes, **caractérisé en ce que** la fenêtre de corrélation (30) et les fenêtres de recherche (32) comprennent la même zone, la zone étant inférieure à 0,5 %, de préférence inférieure à 0,1 %, en particulier inférieure à 0,01 %, de la zone de l'image caméra et/ou de l'image de référence (22, 24).

8. Procédé selon au moins l'une des revendications précédentes, **caractérisé en ce que** la fenêtre de corrélation (30) et les fenêtres de recherche (32) sont circulaires.

9. Procédé selon la revendication 1, **caractérisé en ce que** l'agrégat est formé sur 3x3 distances de Hamming, et la corrélation a lieu sur la base de l'agrégat.

10. Procédé selon au moins l'une des revendications précédentes, **caractérisé en ce que** l'image de caméra (22) et l'image de référence (24) sont rectifiées et/ou filtrées avec un filtre de bruit.

11. Procédé selon au moins l'une des revendications précédentes, **caractérisé en ce que** les fenêtres de recherche (32) ne sont disposées que le long de la ligne épipolaire (36) de l'image de référence (24).

12. Procédé selon au moins l'une des revendications précédentes, **caractérisé en ce que** l'image de référence (24) est produite au moment du développement ou de la production.

13. Système (10) de détection tridimensionnelle d'objets (12) comprenant un dispositif de détection d'image (14), un dispositif d'éclairage (20) et une unité de calcul, **caractérisé en ce que** le système (10) est adapté pour réaliser un procédé selon au moins l'une des revendications précédentes.
